# EUROPÄISCHE PATENTANMELDUNG

(11) **EP 4 803 772 A1**
(43) Veröffentlichungstag der Anmeldung: **09.09.2026**
(21) Anmeldenummer: 25162079.5
(22) Anmeldetag: 06.03.2025
(51) Int. Cl.: F16D 55/36, F16D 55/40, F16D 55/24

(54) **LAMELLENBREMSE**

(71) Anmelder: Miba Sinter Austria GmbH, 4663 Laakirchen (AT)
(72) Erfinder: BERGER, Stefan, 4642 Sattledt (AT); SCHAUER, Markus, 4623 Gunskirchen (AT); HAGAUER, Christoph, 4671 Neukirchen bei Lambach (AT)
(74) Vertreter: Burger, Hannes Alfred

(57) **Zusammenfassung**

Lamellenbremse mit einem Bremslamellenpaket 1 mit mindestens einer Innenlamelle und mindestens einer Außenlamelle, wobei Innen- und Außenlamelle entlang einer Achse 15a axial zumindest teilweise abwechselnd angeordnet sind und wobei zumindest eine der mindestens einen Innenlamelle und/oder der mindestens einen Außenlamelle einen Reibbelag aufweist und einem am Bremslamellenpaket angeordneten Bremsaktuator zur Betätigung des Bremslamellenpaket, wobei der Bremsaktuator ein axial verschiebbares Betätigungselement 29 zur Betätigung des Bremslamellenpaketes aufweist, und an der dem Betätigungselement axial gesehen gegenüberliegenden Seite des Bremslamellenpakets ein Gegenhalter 28 vorgesehen ist, so dass durch axiale Einwirkung des Betätigungselementes auf das Bremslamellenpaket zwischen der mindestens einen Innenlamelle und der mindestens einen Außenlamelle des Bremslamellenpaketes ein Reibschluss herstellbar ist. Dabei ist zumindest ein Strukturelement 33 zur Aufnahme der axialen Kräfte der Lamellenbremse vorgesehen, so dass sich Betätigungselement 29 und Gegenhalter 28 an dem zumindest einem Strukturelement 33 axial abstützen und das Bremslamellenpaket 1, das Betätigungselement 29, der Gegenhalter 28 und das zumindest eine Strukturelement 33 als Modul vormontierbar sind.

## Beschreibung

Die Erfindung betrifft eine Lamellenbremse mit einem Bremslamellenpaket mit mindestens einer Innenlamelle und mindestens einer Außenlamelle, wobei Innen- und Außenlamelle axial angeordnet sind und wobei zumindest eine der mindestens einen Innenlamelle und/oder der mindestens einen Außenlamelle einen Reibbelag aufweist und einem am Bremslamellenpaket angeordneten Bremsaktuator zur Betätigung des Bremslamellenpaketes, wobei der Bremsaktuator ein axial verschiebbares Betätigungselement zur Betätigung des Bremslamellenpaketes aufweist, und an der gegenüberliegenden Seite des Bremslamellenpakets ein Gegenhalter vorgesehen ist, wobei der Gegenhalter dem Bremslamellenpaket an der dem Betätigungselement in Bezug auf das Lamellenpaket gegenüberliegenden Seite benachbart angeordnet ist.

Aus dem Stand der Technik sind verschiedenen Ausführungen zu Lamellenbremsen bekannt. Eine besondere Ausführung ist beispielweise aus der AT520430A4, DE1023114181A1 bekannt. Darin ist ein Lamellenbremssystem geoffenbart, das in einem Gehäuse gekapselt wird. Eine solches Bremssystem ist insbesondere für E-Fahrzeuge und insbesondere zur Verhinderung der Emission von Bremspartikel interessant. Im Stand der Technik gibt es dazu verschiedene Systeme zur Betätigung einer solchen Bremse.

Es ist eine Aufgabe der vorliegenden Erfindung eine besonders effizientes Betätigungssystem im Zusammenhang mit einer Lamellenbremse zu entwickeln. Dieses System soll besonders effizient, raum- und kostensparend ausgeführt sein. Zusätzlich soll die Lamellenbremse einfach montierbar sein. Ferner soll eine gute Durchströmung von Flüssigkeit, insbesondere durch Öl, möglich sein, wie das bei nasslaufenden Lamellenbremse zur Kühlung erforderlich bzw. bevorzugt ist. Es ist deshalb eine der Aufgaben der Erfindung eine Lamellenbremse aus dem Stand der Technik weiterzuentwickeln. Diese Aufgabe wird nach Anspruchs 1 gelöst.

Durch die erfindungsgemäße Ausführung als kraftmäßig in sich geschlossenes System werden keine Axialkräfte an die Umgebung, insbesondere an das Bremsgehäuse und/oder Achsgehäuse abgeleitet. Diese Axialkräfte werden an der Kupplung zumindest teilweise durch ein geeignetes Strukturelement aufgenommen. Dadurch vereinfacht sich die Auslegung des Gehäuses und Gehäusetoleranzen haben keinen oder geringeren Einfluss auf die Auslegung, Montage und Betrieb der Lamellenbremse, da sich Toleranzketten wesentlich verkürzen. Temperaturtoleranzen des Gehäuses bzw. die Temperaturen/Viskositäten der Flüssigkeiten bei nasslaufenden Lamellenbremsen haben auf diese Weise einen geringeren Einfluss auf die Funktion der Lamellenbremse, als das im Stand der Technik der Fall ist. Toleranzen können bereits bei einer Vormontage des Lamellenbremsmoduls ausgeglichen werden.

Die erfindungsgemäße Lamellenbremse eignet sich besonders zur Anwendung in einem geschlossenen Bremssystem, wodurch vermieden werden kann, dass Partikel, beispielsweise als Abrieb der Reibbeläge, unkontrolliert in die Umgebung gelangen.

Nach einer besonderen Ausführungsform der Erfindung sind bei Betätigung des Bremslamellenpaketes die resultierenden abstützenden Axialkräfte des Betätigungselementes und/oder des Gegenhalter zu mehr als 80%, vorzugsweise zu mehr als 90%, auf das zumindest eine Strukturelement übertragbar.

Nach einer besonderen Ausführungsform der Erfindung ist das Strukturelement außen am Lamellenpaket angeordnet. Dabei sind die Außenlamellen mit dem Strukturelement, beispielsweise mit einer Verzahnung und/oder Bohrung, so drehfest verbunden, dass auf diese Weise ein durch die Lamellen übertragenes Bremsdrehmoment abstützbar ist.

Nach einer besonderen Ausführungsform der Erfindung ist das zumindest eine Strukturelement als Bolzen ausgeführt. Dabei sind die Lamellen bevorzugt über Bohrungen mit dem Bolzen verbunden. Hierdurch ist das entstehende Bremsdrehmoment auf den Bolzen übertragbar.

Nach einer anderen Ausführungsform kann anstatt eines Bolzens ein beliebiges geeignetes metallisches Verbindungselement verwendet werden.

Nach einer besonderen Ausführungsform der Erfindung ist sind über den Umfang der Lamellenbremse zumindest zwei, bevorzugt zumindest drei, Bolzen als das zumindest eine Strukturelement angeordnet.

Nach einer besonderen Ausführungsform der Erfindung sind die Bolzen in Art eines Käfigs zumindest teilweise um das Bremslamellenpaket angeordnet.

Nach einer besonderen Ausführungsform der Erfindung ist das an einem axial gesehen ersten Endabschnitt des zumindest einen Strukturelementes der Gegenhalter befestigt. An einem axial gesehen gegenüberliegenden zweiten Endabschnitt des zumindest einen Strukturelementes ist das Betätigungselement abstützend befestigt, so dass die Axialkräfte bei Betätigung der Bremslamellenpakets über die Befestigungen des Betätigungselementes und des Gegenhalters durch das Strukturelement aufnehmbar sind. Nach einer besonderen Ausführungsform der Erfindung wird das Strukturelement an der Seite des Gegenhalters über eine Drehmomentenstütze mit dem Gehäuse verbunden, um so eine kritische Verwindung des Strukturelementes zu verhindern. Nach einer besonderen Ausführung werden über die Drehmomentenstütze keine oder nur sehr geringe Axialkräfte, vorzugsweise weniger als 25%, bevorzugt weniger als 15%, besonders bevorzugt weniger als 5% der über das mindestens eine Strukturelement aufgenommenen Axialkräfte, die bei Betätigung des Bremslamellenpaketes auftreten, in das Gehäuse eingeleitet.

Nach einer besonderen Ausführungsform der Erfindung ist das zumindest eine Strukturelement über eine Befestigung, beispielsweise durch eine Verschraubung, mit einem Gehäuse verbunden, so dass Tangentialkräfte bzw. Umfangskräfte , die durch das aufgenommene Bremsdrehmoment der aktivierten Lamellenbremse entstehen können, über das zumindest eine Strukturelement in das Gehäuse übertragbar sind.

Nach einer besonderen Ausführungsform der Erfindung werden über die Befestigung des zumindest einen Strukturelementes an dem Gehäuse weniger als 10%, insbesondere weniger als 5%, der Axialkräfte des Betätigungselementes und/oder Gegenhalters an das Gehäuse übertragen.

Nach einer besonderen Ausführungsform der Erfindung weist der am Bremslamellenpaket angeordnete Bremsaktuator zur Betätigung des Bremslamellenpaket eine Kugelrampe mit einem ersten Kugelrampenkörper und einem zweiten Kugelrampenkörper und mindestens eine zwischen dem ersten und dem zweiten Kugelrampenkörper angeordneten Rotationskörper, auf. Dabei weist der erste und/oder der zweite Kugelrampenkörper an seiner Oberfläche mindestens eine Bahn mit zumindest teilweise variierender Tiefe auf, entlang der der mindestens eine Rotationskörper bewegbar ist. Bevorzugt ist dabei der erste Kugelrampenkörper auf einer ersten Seite, über die mindestens eine Kugel mit dem zweiten Kugelrampenkörper so verbunden, dass durch Drehen des zweiten Kugelrampenkörper der erste Kugelrampenkörpers axial bewegbar ist. Der erste Kugelrampenkörper ist dem Bremslamellenpaket benachbart angeordnet und damit als Betätigungselement zur direkten Betätigung des Bremslamellenpaketes eingerichtet.

Nach einer besonderen Ausführungsform der Erfindung ist ein, insbesondere elektrischer, Motor vorgesehen, so dass der erste und/oder der zweite Kugelrampenkörper über den Motor drehbar ist. Nach einer besonderen Ausführungsform ist zwischen Motor und Kugelrampenkörper ein geeignetes Getriebe vorgesehen

Nach einer besonderen Ausführungsform der Erfindung ist die Lamellenbremse als nasslaufende Lamellenbremse eingerichtet, so dass eine Zuführung von Kühlflüssigkeit zur Kühlung des Bremslamellenpaketes vorgesehen ist.

Dadurch, dass das Betätigungselement und/oder der Gegenhalter an einem Reibbelag zumindest einer der mindestens einen Innenlamellen und/oder mindestens einen Außenlamellen anliegt, so dass im Falle einer Aktivierung der Lamellenbremse der Gegenhalter und/oder das Betätigungselement direkt auf den Reibbelag zumindest einer der Innen- und/oder Außenlamellen einwirkt und diese, insbesondere kontaktiert und/oder abbremst, kann der axiale Bauraum der Lamellenbremse verringert werden. Ferner können beispielsweise auch Stahllamellen oder sonstige Teile, die üblicherweise zwischen dem Betätigungselement und der Reiblamelle einerseits und/oder dem Gegenhalter und der Reiblamelle andererseits, angeordnet sind, eingespart werden.

Die Betätigung der Lamellenbremse kann gesteuert über Hydraulik, Pneumatik oder über ein Getriebe, insbesondere über ein E-Getriebe, mit geeigneter Übersetzung erfolgen.

Nach einer besonderen Ausführungsform liegt sowohl das Betätigungselement als auch der Gegenhalter jeweils an dem Reibbelag zumindest einer der mindestens einen Innenlamellen und/oder mindestens einen Außenlamellen an, so dass im Falle einer Aktivierung der Lamellenbremse der Gegenhalter und das Betätigungselement direkt auf den Reibbelag zumindest einer der Innen- und/oder Außenlamellen einwirkt und diese insbesondere kontaktiert und/oder abbremst.

Durch das gewählte erfindungsgemäße Design ist eine besonders platzsparende Bauweise möglich. Insbesondere die wichtige axiale Baulänge der Lamellenbremse kann so reduziert werden.

Nach einer besonderen Ausführungsform der Erfindung wird das Bremslamellenpaket nicht, wie im Stand der Technik vorgeschlagen, axial an einem Getriebe- und/oder Bremsengehäuse abgestützt, sondern mittels mindestens einem Strukturelement, das außen in der Art eines Käfigs angeordnet ist, direkt axial abgestützt. Dadurch ist eine kurze Toleranzkette verwirklichbar. Es ist ein einfacherer Toleranzausgleich und kein Außenlamellenträger, wie im Stand der Technik üblich erforderlich. Dadurch ist das neuartige Design kostengünstiger und die Lamellen sind einfacher kühlbar, insbesondere beölbar.

Nach weiteren vorteilhaften Ausführungen der Erfindung ist eine einseitige Anbindung, im Sinne einer Axialkraftabstützung, ans Gehäuse vorgesehen. So kann beispielsweise an der, der Axialkrafteinleitung ins Gehäuse, gegenüberliegenden Seite eine Gehäuseanbindung mit Drehmomentenstütze, so dass keine kritische Verwindung des Strukturelementes erfolgt.

Nach einer besonderen Ausführungsform der Erfindung, weist die Lamellenbremse ein derart geschlossenes Gehäuse auf, dass Verschleißpartikel nicht in die Umwelt gelangen können.

In den folgenden schematischen Figuren ist die Erfindung anhand von nicht-einschränkenden Ausführungsformen gezeigt. Es zeigen:
Fig. 1 ein beispielhaftes Bremslamellenpaket in Schrägansicht
Fig. 2 eine beispielhafte Außenlamelle des Bremslamellenpakets
Fig. 3 eine beispielhafte Innenlamelle des Bremslamellenpakets
Fig. 4 die beispielhafte Anordnung des Bremslamellenpakets in einer E Achse
Fig. 5 eine schematische Ansicht einer möglichen Ausführung einer Lamellenbremse
Fig. 6 eine schematische Teilansicht einer möglichen Außenlamelle zur Verwendung in einem möglichen Bremslamellenpaket
Fig. 7 eine schematische Ansicht einer weiteren möglichen Ausführung einer Lamellenbremse in vereinfachter Darstellung

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

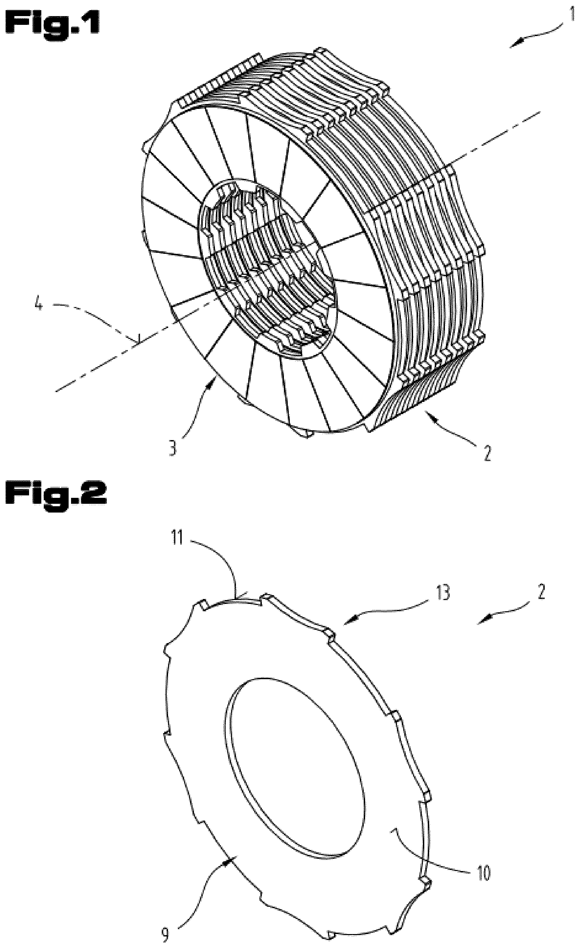

In Fig. 1 bis Fig. 3 sind Ausführungen, wie teilweise aus dem Stand der Technik bereits bekannt, gezeigt. Dabei sind ein Bremslamellenpaket 1 und dessen Bestandteile gezeigt. Das Bremslamellenpaket 1 weist mehrere Außenlamellen 2 und mehrere Innenlamellen 3 auf, die auch als Bremslamellen bezeichnet werden können. Die Außenlamellen 2 sind in einer Axialrichtung 4 abwechselnd mit den Innenlamellen 3 angeordnet. Über einen entsprechenden Betätigungsmechanismus sind die Innenlamellen 3 relativ zu den Außenlamellen 2 in der Axialrichtung 4 verstellbar, sodass zwischen den Innenlamellen 3 und den Außenlamellen 2 ein Reibschluss ausgebildet wird. Die Innenlamellen 3 weisen einen zumindest annährend ringförmigen Grundkörper 5 mit einer ersten Oberfläche 6 und einer dieser in der Axialrichtung 4 gegenüberliegenden zweiten Oberfläche 7 auf. Auf der ersten und/oder der zweiten Oberfläche 6 und 7 ist jeweils zumindest ein Reibbelag 8 angeordnet. Die Innenlamellen 3 sind also sogenannte Belagslamellen. Es ist aber auch möglich, dass die Innenlamellen 3 keine Reibbeläge 8 aufweisen.

Die Reibbeläge 8 können dem Stand der Technik entsprechend ausgebildet sein. Die Außenlamellen 2 weisen ebenfalls einen zumindest annährend ringförmigen Grundkörper 9 auf, der allerdings frei von Reibbelägen ist. Die Außenlamellen 2 sind also die sogenannten Gegenlamellen, die in Reibschluss mit den Reibbelägen 8 der Innenlamellen 3 verbracht werden können. Es ist aber auch möglich, dass auf einer der beiden Oberflächen 1O, 11 der Außenlamellen 2 Reibbeläge 8 angeordnet sind, insbesondere wenn auf den Innenlamellen 3 keine Reibbeläge 8 angeordnet sind. Der oder die Reibbeläge 8 kann/können durch Sinterreibbeläge oder harzgebundene Reibbelage gebildet sein, wie sie prinzipiell für Reiblamellen aus dem Stand der Technik bekannt sind. Die Gegenlamellen und die Grundkörper der Innenlamellen können aus einem beliebigen, geeigneten Material gefertigt sein, es bieten sich metallische Werkstoffe wie Stahl, Aluminium, etc. an. Die Innenlamellen 3 sind drehfest mit einem ersten Bauteil, beispielsweise einer Welle, verbunden. Dazu können die Innenlamellen 3 an einer radial inneren Stirnfläche radial nach innen vorragende Vorsprünge 12 aufweisen, die in entsprechende Ausnehmungen des ersten Bauteils eingreifen. Die Außenlamellen 2 sind mit einem zweiten feststehenden Bauteil, das beispielsweise als Teil des tragenden Gehäuses der Bremse ausgeführt sein kann oder mit diesem verbunden ist, drehfest verbunden. Dazu können die Außenlamellen 2 an einer radial äußeren Stirnfläche radial nach außen ragende Verzahnungen oder Vorsprünge 13 aufweisen, die in entsprechende Ausnehmungen an einer radial inneren Oberfläche des zweiten Bauteils eingreifen können. Das Bremslamellenpaket 1 ist Teil eines Bremslamellenreibsystems in einem nicht dargestellten Fahrzeug. Dieses Fahrzeug weist beispielsweise neben dem Bremslamellenpaket 1 auch einen Elektromotor als Antrieb auf. Dieser Elektromotor kann dabei der Hauptantrieb (Elektroauto) oder eine Nebenantrieb (Hybridauto) sein. Andere Ausführungen sind möglich.

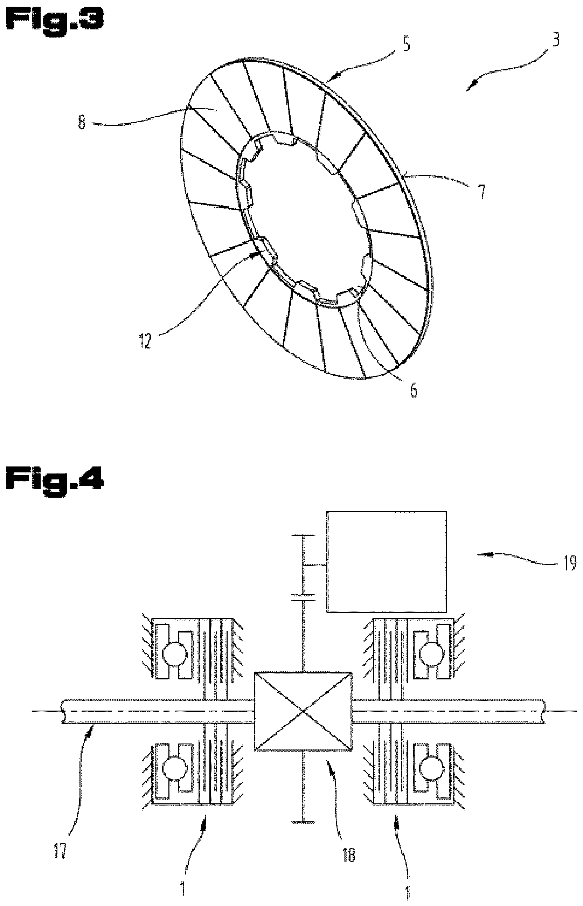

In Fig. 4 ist schematisch dargestellt, dass zumindest ein Bremslamellenpaket 1 an der Antriebswelle 31 eines elektrischen Achsantriebs 15 eines Kraftfahrzeugs angeordnet ist. Insbesondere zeigt diese Ausführungsvariante jeweils ein Bremslamellenpaket 1 unmittelbar vor und unmittelbar nach einem Differential 18 des Kraftfahrzeugs. Das Differential 18 ist mit einem Elektromotor 19 verbunden. Die Bremslamellenpakete 1 sind in Gehäusen 14 eingekapselt, die verhindern, dass Partikel in die Umwelt gelangen. Wie schematisch gezeigt ist, werden die Bremslamellenpakete durch einen Kugelrampenmechanismus betätigt.

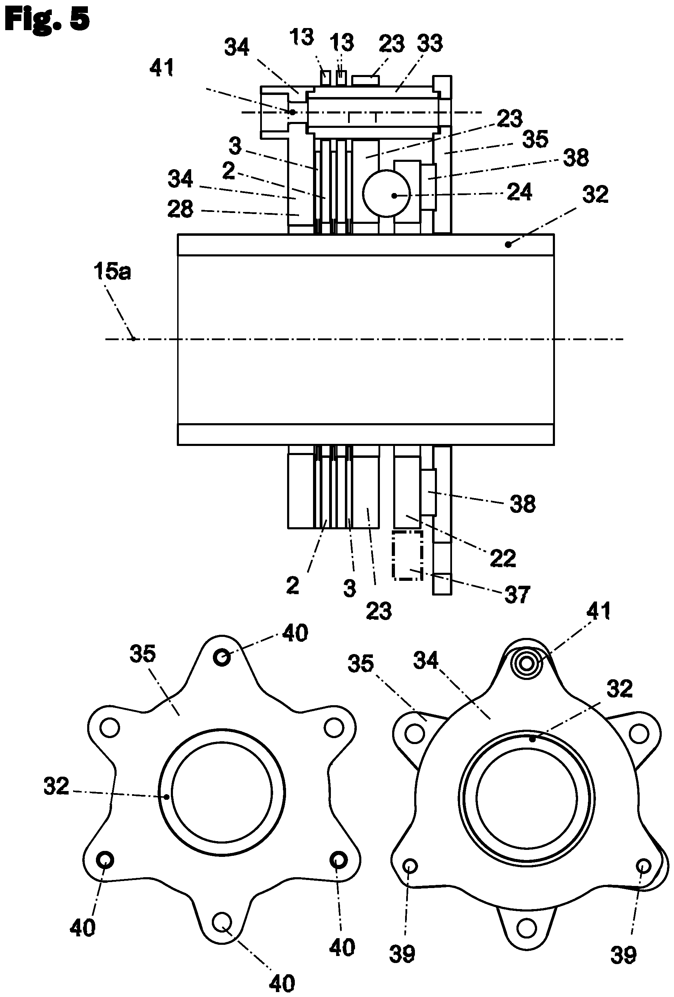

In Fig. 5 ist ein Ausführungsbeispiel einer Lamellenbremse dargestellt, wobei nur für das Verständnis der Erfindung wesentliche Teile in vereinfachter und schematischer Weise dargestellt sind. Es ist eine schematische Schnittdarstellung wesentlicher Teile der Lamellenbremse gezeigt, wobei der besseren Übersichtlichkeit wegen auf Schraffierungen verzichtet wird. Ferner sind Seitenansichten von Seitenteilen der Lamellenbremse dargestellt. Es ist ein Bremslamellenpaket 1 dargestellt, das Innen- und Außenlamellen 3, 2 aufweist. Die Innenlamellen 3 sind dabei als Reiblamellen ausgeführt und drehfest mit einer Welle 32 verbunden. Eine solche Verbindung kann nach einer besonderen Ausführungsform über eine Innenverzahnung bzw. geeignete Vorsprünge 12 der Innenlamellen verwirklicht werden. Die Innenlamellen 3 weisen ein Trägermaterial, beispielsweise eine metallische Tragscheibe, mit einem darauf aufgetragenen Reibbelag auf. Die Außenlamellen 2 sind beispielsweise als Stahllamellen ausgeführt und weisen eine geeignete Außenverzahnung bzw. entsprechende Vorsprünge oder Bohrungen 13 auf. Mit diesen Bohrungen 13 sind die Außenlamellen mit zumindest einem Strukturelement 33 in drehfester Verbindung. Innen- und Außenlamellen 3, 2 sind axial verschiebbar auf der Welle 32 angeordnet. Die Außenlamellen 2 sind in ihrer Bohrung bzgl. dem Strukturelement 33 axial verschiebbar angeordnet. Das zumindest eine Strukturelement ist nach einer bevorzugten Ausführungsform als Bolzen 33 ausgeführt. Das Strukturelement kann auch konstruktiv anderwärtig ausgeführt sein, beispielsweise als Schraube, stiftförmiges Bauteil, etc. Der Bolzen 33 ist seitlich geeignet befestigt. Über diese Befestigung werden Kräfte die im Zuge der Betätigung des Bremslamellenpakets entstehen, an das Gehäuse abgeleitet. Da die Kräfte aus der Lamellenbremse über den Bolzen aufgenommen werden sollen, ist der Bolzen an einer Seite zur Aufnahme von axialen und tangentialen Kräften abgestützt, während der Bolzen auf der zweiten Seite nur hinisichtlich Drehmoment bzw. für tangentiale Kräfte abgestützt wird. Über die axiale Befestigung werden die Kräfte aus der axialen Betätigung der Lamellenbremse abgeleitet, während über die tangentiale Abstützung das Drehmoment, das über das Bremsen der Lamellen resultiert abgeleitet wird. Der Bolzen ist dazu auf einer ersten Seite mit einem ersten Seitenteil 34 befestigt. Die Seitenteile 34, 35 sind in der schematischen Figur 5 zusätzlich in einer Seitenansicht dargestellt. Der erste Seitenteil 34 ist dabei gemeinsam mit dem Gegenhalter 28 ausgeführt. Die Befestigung kann dabei über eine Verschraubung (nicht dargestellt) erfolgen, die in einer Bohrung 41 vorgesehen ist. Der erste Seitenteil 34 wiederum ist zur Übertragung der durch das Abbremsen der Innenlamellen auftretenden Tangentialkräfte, die durch den Bolzen 33 auf das erste Seitenteil 34 übertragen werden, durch ein äußeres Gehäuse (nicht dargestellt) abgestützt.

Auf der gegenüberliegenden Seite ist der Bolzen 33 an einem zweiten Seitenteil 35 befestigt. Das kann wiederum durch eine Verschraubung verwirklicht werden.

Der Bremsaktuator weist einen geeigneten Antrieb auf (schematisch dargestellt), der beispielsweise als E-Motor 37 ausgeführt ist. Ferner ist ein Kugelrampe 21 vorgesehen. Die Kugelrampe 21 weist einen ersten und einen zweiten Kugelrampenkörper 22, 23 und eine oder mehrere dazwischen angeordnete Rotationskörper 24, insbesondere Kugeln, auf. Durch Verdrehen des ersten Kugelrampenkörpers 22 gleiten die Rotationskörper 24 in bekannter Weise auf entsprechenden in den Kugelrampenkörper vorgesehenen Bahnen ab, wodurch eine axiale Verlagerung des zweiten Kugelrampenkörpers 23 in Richtung des Bremslamellenpaketes 1 erfolgt. Der E-Motor 37 ist beispielsweise mit dem ersten Kugelrampenkörper 22 geeignet verbunden. Der E-Motor verdreht den ersten Kugelrampenkörper 22 wodurch der zweite Kugelrampenkörper 23, der als Betätigungselement 29 des Lamellenbremspakets verwendet wird, verschoben wird. Das Bremslamellenpaket wird auf diese Weise zusammengepresst, wodurch ein Reibschluss zwischen Innen- und Außenlamellen 3, 2 erfolgt und die drehende Welle 32 abgebremst wird.

Beim Anpressen des zweiten Kugelrampenkörpers 23 als Betätigungselement 29 gegen das Bremslamellenpaket 1 entsteht eine axiale Reaktionskraft am ersten Kugelrampenkörper 22 die über ein Axiallager 38 und den zweiten Seitenteil 35 auf den Bolzen 33 bzw. über die Befestigung des Bolzens übertragen wird. Auf der gegenüberliegenden Seite des Bremslamellenpaketes 1 erfährt der Gegenhalter 28 eine axiale Kraft, die aus der Betätigung des Betätigungselementes 29 resultiert. Die Abstützung des Gegenhalters 28 erfolgt ebenso über den Bolzen 33, so dass der der Bolzen die axiale Kraft aus der Betätigung der Bremse aufnimmt. Das Drehmoment der Bremse, also tangentiale Kraft wird über entsprechende Befestigungen der ersten und zweiten Seitenteile 34, 35 aufgenommen und über ein äußeres Gehäuse (nicht dargestellt) abgeleitet. Dabei ist der erste Seitenteil 34 als Anschlag für die Tangentialkraft vorgesehen. Über das zweite Seitenteil 35 erfolgt die axiale Befestigung des Strukturelementes. Diese dazu verwendeten Befestigungen sind in dem Fachmann bekannterweise Weise, beispielsweise als Verschraubungen, ausgeführt. Schematisch sind dabei Verschraubungspunkte 39 zur Befestigung des Bolzens 33 am ersten Seitenteil 34 gezeigt, wobei beispielhaft und der besseren Übersichtlichkeit halber nur eine Schraube 41 schematisch gezeigt ist. Schematisch sind ferner Verschraubungspunkte 40 des zweiten Seitenteiles 35 mit dem Strukturelement 33 gezeigt. Wie aus der schematischen Figur ersichtlich können mehrere, insbesondere drei Bolzen als Strukturelemente verwendet werden. Die Anzahl der Bolzen wird in Abhängigkeit der zu übertragenden Kräften gewählt.

Das in den Figuren gezeigte Modul kann beispielsweise mehrfach an einer Achse verbaut werden. Hierdurch kann beispielsweise bei einem einzelnen Modul die Anzahl der Lamellen verringert werden, was eine schnellere Steuerung der einzelnen Lamellenbremse ermöglicht. Werden zwei solche Module an einer Achse angeordnet, können damit beispielsweise die Halbachsen getrennt voneinander gebremst werden.

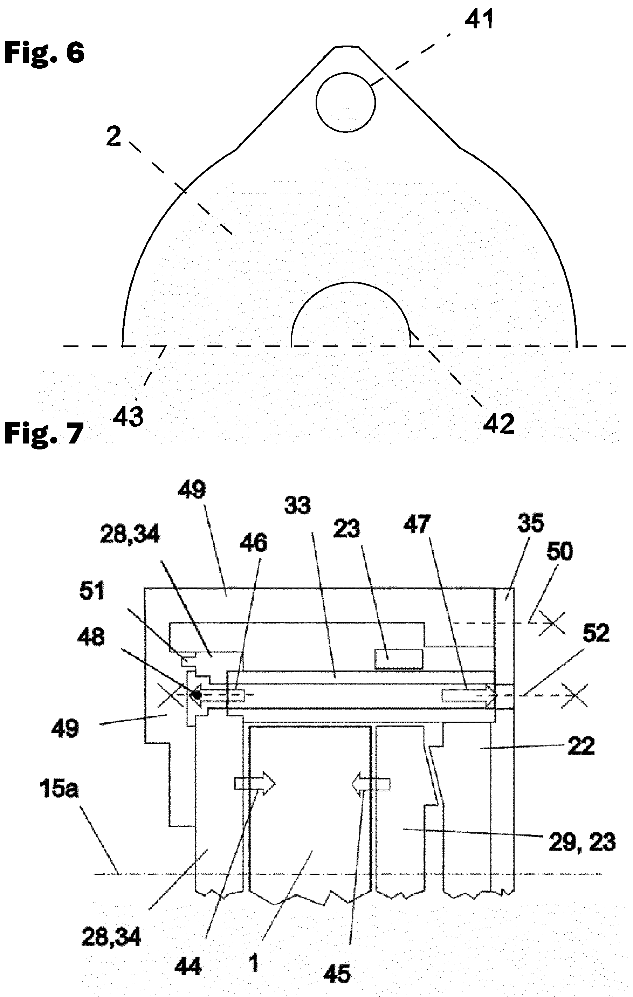

In Fig. 6 ist schematisch ein Ausschnitt einer Außenlamelle 2 gezeigt. Es ist bezgl. einer Mittelebene 43 obere Teil einer Außenlamelle ersichtlich. Die Außenlamelle 2 weist zentrale Bohrung 42 zur Aufnahme der drehenden Welle 32 auf. Entsprechend der gezeigten Ausführungsform dreht sich die Welle 32 relativ zur Außenlamelle. Ferner ist eine Bohrung 41 zur drehfesten Aufnahme des Bolzens 33 (nicht dargestellt) vorgesehen. Durch Reibkontakt und/oder Formschluss zwischen der, mit der Welle 32 drehfest verbunden, Innenlamelle 3 und der, gegenüber der Welle stehenden, Außenlamelle 2 erfolgt ein Abbremsen der Welle 3, wie aus dem Stand der Technik bekannt. Das Bremsmoment wird über die Außenlamelle 2 und den in der Bohrung 41 vorgesehenen Bolzen 33 aufgenommen.

In Fig. 7 ist eine Lamellenbremse in einer sehr vereinfachten schematischen Zeichnung wieder gegeben. Dabei ist nur der obere Teil der Lamellenbremse dargestellt. Der bzgl. der Mittelachse 15a symmetrische untere Teil der Lamellenbremse wird der besseren Übersichtlichkeit nicht dargestellt.

Ersichtlich ist ein Bremslamellenpaket 1, wobei die Innen- und Außenlamellen nicht im Detail dargestellt sind. Die Lamellen sind in - dem Fachmann bekannterweise - mit einer Welle und mit dem Bolzen 33 verbunden. Dargestellt sind das Betätigungselement 29 und der Gegenhalter 28. Das Betätigungselement 29 ist als zweiter Kugelrampenkörper 23 eines Kugelrampenmechanismus ausgeführt. Der erste Kugelrampenkörper 22 wird in bekannter Weise durch einen Aktuator gedreht, worauf der zweite Kugelrampenkörper 23 an das Lamellenpaket 1 zugestellt wird und bei weiterer Betätigung eine Kraft auf das Lamellenpaket 1 ausübt. Das Lamellenpaket wird damit in Reibschluss gebracht und das Lamellenpaket zwischen Betätigungselement 29 und dem Gegenhalter 28 gepresst. Es ist ein Bolzen als Strukturelement 33 ausgeführt, der an dem zweiten Seitenteil 35, insbesondere über eine Verschraubung 52, befestigt ist. Das äußere Gehäuse 49 ist beispielsweise aus mehreren Teilen zusammengesetzt, die wiederum beispielsweise über Verschraubungen 50 miteinander verbunden sind. Der erste Kugelrampenkörper 22 ist direkt oder indirekt mit dem Bolzen 44 verbunden. Der erste Kugelrampenkörper 22 ist vorzugsweise drehbar ausgeführt und stützt sich über ein Lager auf dem zweiten Seitenteil 35 ab (nicht im Detail dargestellt). An der gegenüberliegenden Seite ist der Bolzen 33 an dem Gegenhalter 28 befestigt, beispielsweise mit einer Verschraubung 48. Der Gegenhalter 28, der funktional als erster Seitenteil 34 der Lamellenbremse ausgeführt ist, stützt sich axial gegen den Bolzen 33 ab. Axialkräfte aus der Bremse werden damit an den Bolzen 33 übertragen- Die Abstützung des über den Bolzen 33 aufgenommenen Drehmomentes der Bremse erfolgt schematisch dargestellt über eine geeignete Auskragung 51 am ersten Seitenteil 34 an das Gehäuse 49 übertragen. Zum besseren Verständnis sind schematisch Pfeile 47 und 46 eingetragen, um anzuzeigen, wie der Bolzen 33 durch die aufgenommenen Axialkräfte Dehnungskräfte erfährt. Diese sind den auf das Lamellenpaket 1 ausgeübten Kräften des Betätigungselementes 29 und des Gegenhalters 28, die durch die schematischen Pfeile 44 und 45 bezeichnet sind, entgegengesetzt.

## Patentansprüche

1. Lamellenbremse mit einem Bremslamellenpaket mit mindestens einer Innenlamelle und mindestens einer Außenlamelle, wobei Innen- und Außenlamelle entlang einer Achse axial zumindest teilweise abwechselnd angeordnet sind und wobei zumindest eine der mindestens einen Innenlamelle und/oder der mindestens einen Außenlamelle einen Reibbelag aufweist und einem am Bremslamellenpaket angeordneten Bremsaktuator zur Betätigung des Bremslamellenpaket, wobei der Bremsaktuator ein axial verschiebbares Betätigungselement zur Betätigung des Bremslamellenpaketes aufweist, und an der dem Betätigungselement axial gesehen gegenüberliegenden Seite des Bremslamellenpakets ein Gegenhalter vorgesehen ist, so dass durch axiale Einwirkung des Betätigungselementes auf das Bremslamellenpaket zwischen der mindestens einen Innenlamelle und der mindestens einen Außenlamelle des Bremslamellenpaketes ein Reibschluss herstellbar ist und wobei zumindest ein Strukturelement zur Aufnahme der axialen Kräfte der Lamellenbremse vorgesehen ist, so dass sich Betätigungselement und Gegenhalter an dem zumindest einem Strukturelement axial abstützen und das Bremslamellenpaket, das Betätigungselement, der Gegenhalter und das zumindest eine Strukturelement als Modul vormontierbar sind.

2. Lamellenbremse nach Anspruch 1, **dadurch gekennzeichnet, dass** bei Betätigung des Bremslamellenpaketes die resultierenden abstützenden Axialkräfte des Betätigungselementes und/oder des Gegenhalter zu mehr als 80%, vorzugsweise zu mehr als 90%, auf das zumindest eine Strukturelement übertragbar sind.

3. Lamellenbremse nach Anspruch 1 oder 2, **dadurch gekennzeichnet, dass** das Strukturelement außen am Lamellenpaket angeordnet ist und die Außenlamellen mit dem Strukturelement, beispielsweise mit einer Verzahnung oder Bohrung, so drehfest verbunden sind, dass auf diese Weise ein durch die Lamellen übertragenes Bremsdrehmoment übertragbar ist.

4. Lamellenbremse nach einem der vorhergehenden Ansprüche, **dadurch gekennzeichnet, dass** das zumindest eine Strukturelement als metallisches Verbindungselement, insbesondere als Bolzen, ausgeführt ist.

5. Lamellenbremse nach Anspruch 4, **dadurch gekennzeichnet, dass** über den Umfang der Lamellenbremse zumindest zwei, bevorzugt zumindest drei, metallische Verbindungselemente, insbesondere Bolzen, als das zumindest eine Strukturelement angeordnet sind.

6. Lamellenbremse nach einem der vorhergehenden Ansprüche, **dadurch gekennzeichnet, dass** das an einem axial gesehen ersten Endabschnitt des zumindest einen Strukturelementes der Gegenhalter befestigt ist und an einer axial gesehen gegenüberliegenden zweiten Endabschnitt des zumindest einen Strukturelementes das Betätigungselement befestigt ist, so dass die Axialkräfte bei Betätigung der Bremslamellenpakets über die Befestigung des Betätigungselementes und durch die Befestigung des Gegenhalters durch das Strukturelement aufnehmbar sind.

7. Lamellenbremse nach einem der vorhergehenden Ansprüche, **dadurch gekennzeichnet, dass** das zumindest eine Strukturelement über eine Befestigung, beispielsweise durch eine Verschraubung, mit einem tragenden Gehäuse verbunden ist, so dass Radialkräfte, die durch das aufgenommene Bremsdrehmoment der aktivierten Lamellenbremse entstehen können, über das zumindest eine Strukturelement in das tragende Gehäuse übertragbar sind.

8. Lamellenbremse nach Anspruch 7, **dadurch gekennzeichnet, dass** über die Befestigung des zumindest einen Strukturelementes an dem tragenden Gehäuse weniger als 10%, insbesondere weniger als 5%, der Axialkräfte des Betätigungselementes und/oder Gegenhalters an das tragende Gehäuse übertragen werden.

9. Lamellenbremse nach einem der vorhergehenden Ansprüche, **dadurch gekennzeichnet, dass** der am Bremslamellenpaket angeordneten Bremsaktuator zur Betätigung des Bremslamellenpaket eine Kugelrampe mit einem ersten Kugelrampenkörper und einem zweiten Kugelrampenkörper und mindestens eine zwischen dem ersten und dem zweiten Kugelrampenkörper angeordneter Rotationskörper, aufweist und wobei der erste und/oder der zweite Kugelrampenkörper an seiner Oberfläche mindestens eine Bahn mit zumindest teilweise variierender Tiefe aufweist, entlang der der mindestens eine Rotationskörper bewegbar ist, wobei der erste Kugelrampenkörper auf einer ersten Seite, über dem mindestens einen Rotationskörper mit dem zweiten Kugelrampenkörper so verbunden ist, dass durch Drehen des ersten und/oder zweiten Kugelrampenkörper axial bewegbar ist, und der erste Kugelrampenkörpers dem Bremslamellenpaket benachbart angeordnet und als das Betätigungselement zur direkten Betätigung des Bremslamellenpaketes eingerichtet ist.

10. Lamellenbremse nach einem der Ansprüche 9, **dadurch gekennzeichnet, dass** ein, insbesondere elektrischer, Motor vorgesehen ist, so dass der erste und/oder der zweite Kugelrampenkörper über den Motor drehbar ist.

11. Lamellenbremse nach einem der vorhergehenden Ansprüche, **dadurch gekennzeichnet, dass** die Lamellenbremse als nasslaufende Lamellenbremse eingerichtet ist, so dass eine Zuführung von Kühlflüssigkeit zur Kühlung des Bremslamellenpaketes vorgesehen ist.

12. Lamellenbremse nach einem der vorhergehenden Ansprüche, **dadurch gekennzeichnet, dass** die Lamellenbremse ein derart geschlossenes Gehäuse aufweist, so dass Verschleißpartikel nicht in die Umwelt gelangen können.
